# EUROPEAN PATENT APPLICATION

(11) **EP 1 715 258 A2**
(43) Date of publication of application: **25.10.2006**
(21) Application number: 06111560.6
(22) Date of filing: 22.03.2006
(51) Int. Cl.: F24H 7/04, F24H 9/20, F28D 20/02

(54) **Heat-storage type supplying apparatus and heat-storage type heat supplying system**

(30) Priority: 19.04.2005 JP 2005120477; 02.12.2005 JP 2005348972
(71) Applicant: Kabushiki Kaisha Kobe Seiko Sho (Kobe Steel, Ltd.), Kobe-shi, Hyogo 651-8585 (JP)
(72) Inventor: TAKAHASHI, Kazuo, Kobe-shi Hyogo 651-2271 (JP); YAGI, Hiromiki, Kobe-shi Hyogo 651-2271 (JP); HIGASHI, Yasuo, Kobe-shi Hyogo 651-2271 (JP)
(74) Representative: TBK-Patent

(57) **Abstract**

Provided is a heat-storage type heat supplying apparatus capable of supplying a fixed amount of heat-exchange medium to a heat-removing device, by which the heat-removing device is operated efficiently.

The heat-storage type heat supplying apparatus has a heat-storage tank that houses erythritol, which stores heat depending on a state change between solid and liquid, and oil that performs heat exchange by contacting the erythritol, has a smaller specific gravity than that of the erythritol, and is separated from the erythritol, in an internal space, takes in the oil in a lower portion of the internal space, and discharges the oil from an upper portion of the internal space. Then, the apparatus has a discharge tube 6 and an intake tube, which supply the oil discharged from the heat-storage tank to a heat exchanger, and a supply tube and a removing tube, which supply the oil, from which heat has been removed in the heat exchanger, to the heat-storage tank. Further, the apparatus has a flow rate meter that detects the flow rate of the oil flowing in the discharge tube, and a pump that is provided on the discharge tube and controls the flow rate of the oil flowing in the discharge tube based on a detection result from a flow rate control section.

## Description

### Background of the Invention

### Field of the Invention

The present invention relates to a personal or professional heat-storage type heat supplying apparatus of a fixed method or a mobile method, which stores heat by using nighttime electric power or exhaust steam and takes out heat when necessary, and a heat-storage type heat supplying system where a heat-storage type supplying apparatus is utilized in an absorption type water cooler/heater.

### Description of the Prior Art

In recent years, there is a need to reduce energy consumption during a peak time in daytime use of heat, and a heat-storage apparatus that temporarily stores generating heat has been suggested as shown in Japanese Patent Laid-Open No. Sho 58-104494. Further, a system using heat-storage technology as shown in Japanese Patent Laid-Open No. Hei 4-138565 has been suggested for the case where a heat source and a heat-demanding destination are remote. In the invention of Japanese Patent Laid-Open No. Sho 58-104494, a heat-storage tank houses a heat-storage material that stores heat and a heat medium that has a smaller specific gravity than that of the heat-storage material and is separated from the heat-storage material. In the heat-storage tank, the heat medium is separated from the heat-storage material such that the medium is located above the material due to the difference of specific gravity. Then, for example, when the heat medium, to which heat generated from ironworks, garbage-disposal facility or the like has been supplied, is supplied from the bottom portion of the heat-storage tank, the medium moves toward the upper portion of the heat-storage tank because its specific gravity is smaller than that of the heat-storage material. Then, due to direct contact of the medium with the heat-storage material during the movement, the heat supplied to the heat medium transmits to the heat-storage material, and thus heat is stored in the material.

Furthermore, in the case of using the stored heat, when the heat medium to which heat is not supplied is supplied from the bottom portion of the heat-storage tank in the same manner as above, the medium moves to the upper portion of the heat-storage tank because its specific gravity is smaller than that of the heat-storage material. Then, due to direct contact of the medium with the heat-storage material during the movement, the heat stored in the heat-storage material transmits to the heat medium, and thus heat is supplied to the heat medium. Consequently, such heat medium is supplied to a heat-removing device to collect heat in the heat-removing device, and thus heat can be used in an external device such as a heating device, for example.

In the case where heat is exchanged by direct contact between the heat medium and the heat-storage material as in Japanese Patent Laid-Open No. Sho 58-104494, sodium acetate, erythritol or the like, for example, is generally used as a material used as the heat-storage material, and such a material is solid under normal state due to high melting point and its state changes to liquid when it stores heat. Therefore, when heat stored in the heat-storage device as in Japanese Patent Laid-Open No. Sho 58-104494 is taken out, the heat-storage material is changed into solid as heat is taken out continuously. Then, the heat medium to which heat is transmitted by direct contact has difficulty of moving upward in the heat-storage material, and it becomes difficult to discharge the heat medium to which heat has been transmitted from the upper portion of the heat-storage tank. This makes it impossible to supply sufficient heat medium to the heat-removing device, and as a result, there is a danger that the heat-removing device or the external device cannot be operated efficiently. Furthermore, in the case of performing cooling or the like by using such heat-storage apparatus, a combination with an absorption type water cooler/heater using waste heat is considered. However, conditions are set for a temperature and an amount of hot water that the absorption type water cooler/heater receives, and heat quantity stored in the heat-storage tank cannot be used effectively unless such conditions are satisfied.

### Summary of the Invention

Consequently, it is an object of the present invention to provide a heat-storage type heat supplying apparatus capable of supplying a heat-exchange medium of a fixed amount to a heat-removing device and efficiently operating the heat-removing device, and a system where heat can be effectively used in an absorption type water cooler/heater using waste heat.

To achieve the above-described object, the first invention is a heat-storage type heat supplying apparatus where stored heat is supplied to a heat-exchange medium and the heat-exchange medium is supplied to a heat-removing device that takes out heat from the heat-exchange medium to which heat has been supplied, in which the apparatus has: a heat-storage tank that houses a heat storage, which stores heat depending on a state change between solid and liquid, and a heat-exchange medium, which performs heat exchange by contacting the heat storage, has a smaller specific gravity than that of the heat storage, and is separated from the heat storage, in an internal space, takes in the heat-exchange medium in a lower portion of the internal space, and discharges the heat-exchange medium from an upper portion of the internal space; a first supply tube that supplies the heat-exchange medium discharged from the heat-storage tank to a heat-removing device; a second supply tube that supplies the heat-exchange medium, from which heat has been removed in the heat-removing device, to the heat-storage tank; a flow rate detector that detects the flow rate of the heat-exchange medium flowing in the first supply tube; and a first flow rate control section that is provided on the first supply tube and controls the flow rate of the heat-exchange medium flowing in the first supply tube based on a detection result from the flow rate detector.

According to this constitution, the flow rate of the heat-exchange medium flowing in the first supply tube is detected and the flow rate of the heat-exchange medium is adjusted based on the detection result, so that the flow rate of the heat-exchange medium flowing in the first supply tube can be always maintained at a fixed level. With this, a fixed amount of heat-exchange medium can be always supplied to the heat-removing device, and the heat-removing device can be operated efficiently.

Specifically, the heat-exchange medium has a smaller specific gravity than that of the heat storage and is separated from the heat storage, so that the heat storage and the heat-exchange medium are housed in the internal space of the heat-storage tank in a vertically separated manner. Then, by discharging the heat-exchange medium to the lower portion of the internal space, the heat-exchange medium passes through the heat storage, moves to the heat-exchange medium of an upper portion, and the heat storage changes its state from liquid to solid during the movement. Once the heat storage changes to solid, it becomes difficult for the heat-exchange medium, which has been discharged to the lower portion of the internal space, to move upward, and as a result, it is discharged from the heat-storage tank, and the flow rate of the heat-exchange medium flowing in the first supply tube becomes smaller. Consequently, it becomes impossible to supply sufficient heat-exchange medium to the heat-removing device. Therefore, sufficient heat-exchange medium can be supplied to the heat-removing device by adjusting the flow rate of heat-exchange medium flowing in the first supply tube by the first flow rate control section.

Further, the second invention is the heat-storage type heat supplying apparatus according to the first invention, in which under a condition after a state of the heat storage is changed to solid and paths for flowing the heat-exchange medium are formed in the heat storage, the apparatus further has: a second flow rate control section that controls the flow rate of the heat-exchange medium to be supplied from the first supply tube to the heat-removing device by switching the case of stopping the flow of the heat-exchange medium in the first supply tube and the case of allowing the heat-exchange medium to flow in the first supply tube.

According to this constitution, since the heat storage of a liquid state is not solidified to further interfere the flow of heat-exchange medium after the state of heat storage is changed to solid and the paths for heat-exchange medium are formed, the flow rate of the heat-exchange medium supplied to the heat-removing device can be easily controlled by switching the two states being the case of stopping the flow of the heat-exchange medium in the first supply tube and the case of flowing the heat-exchange medium, an operating power of the second flow rate control section can be reduced by stopping the flow, and thus the apparatus can be efficiently operated.

Further, the third invention is the heat-storage type heat supplying apparatus according to the first invention or the second invention, in which the apparatus has: a third supply tube that supplies the heat-exchange medium flowing in the first supply tube directly to the second supply tube; and a third flow rate control section that controls the flow rate of the heat-exchange medium to be supplied from the first supply tube to the heat-removing device by controlling the flow rate of the heat-exchange medium to be supplied from the first supply tube to the third supply tube.

According to this constitution, the flow rate of heat-exchange medium taken in by the heat-removing device can be controlled, so that heat quantity taken out by the heat-removing device can be adjusted.

Furthermore, the fourth invention is the heat-storage type heat supplying apparatus according to the third invention, in which the third flow rate control section controls the flow rate of the heat-exchange medium to be supplied from the first supply tube to the heat-removing device by switching the case of stopping the supply of the heat-exchange medium from the first supply tube to the heat-removing device and supplying the medium to the third supply tube and the case of stopping the supply of the heat-exchange medium from the first supply tube to the third supply tube and supplying the medium to the heat-removing device.

According to this constitution, since the flow rate of the heat-exchange medium supplied to the heat-removing device can be controlled by switching the two states being the case of supplying the heat-exchange medium to the heat-removing device and the case of stopping the supply of the medium, the heat quantity taken out by the heat-removing device can be easily adjusted.

Still further, the fifth invention is the heat-storage type heat supplying apparatus according to the third invention or the fourth invention, in which the apparatus further has: a first heat quantity detector that detects a first thermal parameter being a state variable regarding the heat quantity taken out from the heat-exchange medium by the heat-removing device, in which the third flow rate control section controls the flow rate of the heat-exchange medium to be supplied from the first supply tube to the third supply tube and controls the flow rate of the heat-exchange medium to be supplied from the first supply tube to the heat-removing device based on a detection result of the first heat quantity detector.

According to this constitution, since the flow rate of the heat-exchange medium taken in by the heat-removing device is controlled based on the first thermal parameter being the state variable regarding the heat quantity taken out by the heat-removing device, heat quantity required by the heat-removing device can be taken out.

Further, the sixth invention is the heat-storage type heat supplying apparatus according to the third invention or the fourth invention, in which the apparatus further has: a second heat quantity detector that detects the second thermal parameter being a state variable regarding the heat quantity of the heat-exchange medium to be supplied to the heat-removing device, in which the third flow rate control section controls the flow rate of the heat-exchange medium to be supplied from the first supply tube to the third supply tube and controls the flow rate of the heat-exchange medium to be supplied from the first supply tube to the heat-removing device based on a detection result of the second heat quantity detector.

According to this constitution, since the flow rate of the heat-exchange medium taken in by the heat-removing device is controlled based on the second thermal parameter being the state variable regarding the heat quantity taken out by the heat-removing device, heat quantity required by the heat-removing device can be taken out.

Furthermore, the seventh invention is a heat-storage type heat supplying system that has: the heat-storage type heat supplying apparatus of the fifth invention; an absorption type water cooler/heater that makes cold water by utilizing vaporization heat of water; the heat-removing device that supplies heat taken out from the heat-exchange medium, to which heat has been supplied, to the water utilized in the absorption type water cooler/heater; a first water supply tube that supplies the water from the absorption type water cooler/heater to the heat-removing device; and a second water supply tube that supplies the water, to which heat has been supplied, from the heat-removing device to the absorption type water cooler/heater and has the first heat quantity detector that detects the temperature of the water to which heat has been supplied, as the first thermal parameter, in which the third flow rate control section controls the flow rate of the heat-exchange medium to be supplied from the first supply tube to the third supply tube and controls the flow rate of the heat-exchange medium to be supplied from the first supply tube to the heat-removing device such that the temperature of the water, which is detected by the first heat quantity detector, becomes 70°C or higher and 100°C or lower.

According to this constitution, the flow rate of the heat-exchange medium supplied to the heat-removing device is controlled such that the temperature of water, which is detected by the first heat quantity detector, becomes 70°C or higher and 100°C or lower. Since the absorption type water cooler/heater has a limited temperature of hot water to be used, hot water outside a condition range cannot be used. Therefore, the heat stored can be effectively utilized without wasting it by controlling the temperature of water at 70°C or higher and 100°C or lower.

Still further, the eighth invention is a heat-storage type heat supplying system that has the heat-storage type heat supplying apparatus of the sixth invention and the heat-removing device, in which the heat-removing device is an absorption type water cooler/heater that supplies heat taken out from the heat-exchange medium, to which heat has been supplied, to water and makes cold water by utilizing the vaporization heat of the water.

According to this constitution, by making the heat-removing device become the absorption type water cooler/heater where the heat taken out from the heat-exchange medium, to which heat has been supplied, is supplied to water and makes cold water by utilizing the vaporization heat of the water, the stored heat can be directly used, so that the heat-removing device being the absorption type water cooler/heater can be operated efficiently.

### Brief Description of the Drawings

Fig. 1 is a schematic view of a heat supplying system including a heat-storage type heat supplying apparatus according to an embodiment of the present invention.
Fig. 2 is a view expressing a flowchart that shows an operation of a flow rate control device.
Fig. 3 is a view expressing a flowchart that shows an operation of a flow rate control device.
Fig. 4 is a schematic view expressing the first modification example of the heat supplying system shown in Fig. 1.
Fig. 5 is a schematic view expressing the second modification example of the heat supplying system shown in Fig. 1.
Fig. 6 is a schematic view expressing the third modification example of the heat supplying system shown in Fig. 1.

### Preferred Embodiment of the Invention

In the following, preferred embodiments of the present invention will be described with reference to the drawings.

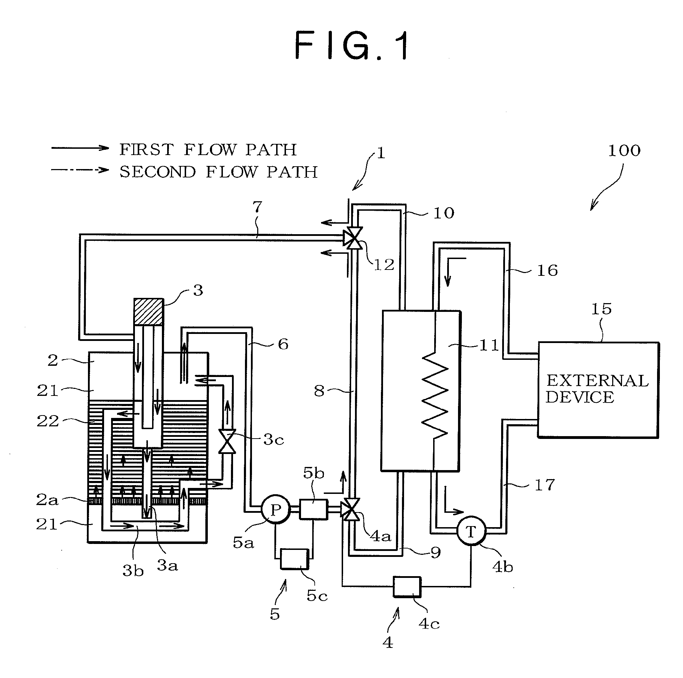

A heat-storage type heat supplying apparatus 1 according to this embodiment is an apparatus that stores waste heat generated from a factory, garbage-disposal facility or the like, and it is preferably used in a heat-storage type heat supplying system 100 or the like. The heat-storage type heat supplying system 100 is made up of a heat exchanger 11 (heat-removing device) connected to the heat-storage type heat supplying apparatus 1 and an external device 15 (absorption type water cooler/heater) connected to the heat exchanger 11 in addition to the heat-storage type heat supplying apparatus 1, as shown in Fig. 1.

### (Heat exchanger)

The heat exchanger 11 collects heat stored in the heat-storage type heat supplying apparatus 1 in order to use it in the external device 15. Specifically, the heat exchanger 11 takes in oil 21 to which heat, which is stored in a heat-storage tank 2 of the heat-storage type heat supplying apparatus 1, is supplied (described later), and on the other hand, takes in a heat medium used in the external device 15. Then, tubes having high heat conductivity in which the oil 21 and the heat medium, which have been taken in, flow are provided so as to contact each other, and the heat of the oil 21 is transmitted to the heat medium indirectly via the wall of the tubes. The heat collected in the heat exchanger 11 in this manner is used in the external device 15.

### (External device)

The external device 15 is an absorption type water cooler/heater that makes cold water by utilizing the vaporization heat of water, and the heat medium is water. The absorption type water cooler/heater can perform cooling, for example, by making cold water. The heat exchanger 11 and the external device 15 are connected to each other by a supply tube 16 (the first water supply tube) that supplies water being the heat medium from the external device 15 to the heat exchanger 11, and an intake tube 17 (the second water supply tube) that takes in the heat medium, to which heat has been transmitted and which has become hot water, from the heat exchanger 11 to the external device 15. When the external device 15 being the absorption type water cooler/heater takes in hot water from the heat exchanger 11, it vaporizes the hot water to make cold water by utilizing vaporization heat generated at the time of vaporization. Then, the device is designed to perform cooling or the like is performed by utilizing the cold water.

Note that the external device 15 may be a water heater supplying hot water, for example, and the heat medium is water in such a case. The device also may be a heater, and the heat medium is air in this case.

### (Heat-storage type heat supplying apparatus)

The heat-storage type heat supplying apparatus 1 has the heat-storage tank 2, a heater 3, a flow path controller 4 (the third flow rate control section), a flow rate controller 5 (the first flow rate control section), and tubes 6 to 10.

The heat-storage tank 2 has an internal space, and a heat-insulating material made of bubble-foamed resin having heat resistance property is attached on its peripheral area. Then, the oil 21 (heat-exchange medium) and erythritol 22 (heat storage) are housed in the internal space of the heat-storage tank 2. Specifically, a separating plate 2a that separates the internal space in two (upper and lower) spaces is disposed in the heat-storage plate 2. The separating plate 2a is a flat plate, and a plurality of holes through which the oil 21 can pass are provided in the plate. Note that the separating plate 2a is formed of a member having high heat conductivity. The oil 21 and the erythritol 22 are housed in the upper side (hereinafter, referred to "upper space") out of the internal spaces that are separated in upper and lower area by the separating plate 21, only the oil 21 is housed in the lower side (hereinafter, referred to as "lower space") out of the separated internal spaces. Meanwhile, the erythritol 22 capable of storing heat efficiently in a short time is used as the heat storage in this embodiment, but it may be sodium acetate trihydrate salt or the like.

The oil 21 is a heat medium to which waste heat generated from a factory or the like is supplied, which exchanges heat with the erythritol 22 by the direct contact with the erythritol 22 to store the waste heat in the erythritol 22, takes out heat stored in the erythritol 22, and supplies it to the heat exchanger 11. Note that when the oil 21 is supplied to the heat exchanger 11 as described above, heat of the oil 21 is collected in order to use the heat in the external device 15. Further, in the explanation below, collecting (taking out) the heat stored in the erythritol 22 is called the cooling of the erythritol 22.

The erythritol 22 directly contacts the oil 21, to which heat has been supplied, to store the heat of the oil 21 depending on a state change between solid and liquid. Specifically, the melting point of the erythritol 22 is about 119°C and it is solid under the normal state (room temperature). Then, when the heat of the oil 21 is transmitted by directly contacting the oil to which heat has been supplied, the state of erythritol changes from solid to liquid, and stores heat in a liquid state. Further, when the erythritol 22 is in a heat-storing state, that is, when the erythritol 22 is in a liquid state, the stored heat is transmitted to the oil 21 by directly contacting the oil 21 having no heat, and the state of erythritol is changed from liquid to solid.

Meanwhile, since the oil 21 has a lighter specific gravity than the erythritol 22 and is not mixed with the erythritol 22, the oil 21 and the erythritol 22 that are housed in the upper space are separated into the oil 21 in an upper layer and the erythritol 22 in a lower layer even if a member or the like is not laid between them for separating from each other. Further, the oil 21 is filled in the lower space, the oil 21 is discharged from the holes of the separating plate 21 by allowing the oil 21 to be discharged from the heater 3 (described later) to the lower space, and the discharging pressure prevents the erythritol 22 in the upper space from moving to the lower space via the holes of the separating plate 2a even if it is liquid.

The heater 3 is integrally provided for the heat storage tank 2, and it supplies waste heat generated from a factory or the like to the oil 21, stops supplying heat, and discharges the oil 21 to the lower portion of the internal space of the heat-storage tank 2. The heater 3 has a heat transfer tube arranged so as to surround and wrap the pipe in which the oil 21 flows, for example, and heat can be supplied (heating) to the oil 21 via a tube wall by sending the waste heat to the heat transfer tube. Then, in the case of storing heat in the erythritol 22, heat is supplied to the oil 21, and the oil 21 to which heat has been supplied is discharged. Further, in the case of cooling the erythritol 22, supply of heat (heating) is stopped and the oil 21 that has been taken in is discharged as it is.

Further, the heater 3 is arranged so as to protrude from the top portion of the heat-storage tank 2 toward the internal space and pass across the boundary surface between the oil 21 and the erythritol 22 in the upper space approximately perpendicularly. By forming the heater 3 and the heat-storage tank 2 into a unit such that a part of the heater 3 is provided in the internal space of the heat-storage tank 2, space saving of the apparatus 1 can be achieved. Further, when heat is supplied to the oil 21 from the heater 3, time and distance required in supplying heat from the heater 3 to the heat-storage tank 2 can be made shorter, the heat of the oil 21 is not taken away in supplying heat, and thus heat can be stored in the erythritol 22 efficiently. Moreover, by arranging the heater 3 so as to pass across the boundary surface between the oil 21 and the erythritol 22, the heat generated from the heater 3 can be transmitted to the erythritol 22, and the heat can be stored more efficiently by effectively utilizing the heat from the heater 3.

Still further, the heater 3 has a tube 3a for heater and an auxiliary tube 3b, which are formed of a member having high heat conductivity. The tube 3a for heater is provided at the lower portion of the heater 3, and it discharges the oil 21 that has been taken in by the heater 3 to the lower space of the heat-storage tank 2. The oil 21 discharged to the lower space is discharged into the erythritol 22 through the holes of the separating plate 2a, and after that, it goes up to the oil 21 in the upper layer. The oil 21 exchanges heat with the erythritol 22 by the direct contact with the erythritol 22 as it goes up in erythritol.

The auxiliary tube 3b is arranged so as to pass through the erythritol 22 in the upper space of the heat-storage tank 2 and the oil 21 in the lower space, and it discharges the oil 21 of the heater 3 into the oil 21 in the upper space of the heat-storage tank 2. In the case where heat is supplied to the oil 21 by the heater 3, the heat of the oil 21 is transmitted to the erythritol 22 and the oil 21 in the lower space by indirect contact via the wall of the auxiliary wall 3b as the oil flows in the auxiliary tube 3b. Consequently, heat can be stored in the erythritol 22, the oil 21 in the lower space can be maintained at high temperature, and thus heat can be stored more efficiently.

Furthermore, as the erythritol 22 is cooled down, that is, as the heat stored in the erythritol 22 is taken out, the erythritol 22 is solidified, so that it becomes difficult for the oil 21, which directly contacts the erythritol 22, to go up in the erythritol 22. Accordingly, the amount of the oil 21 in the upper space is reduced, and it reduces a discharging amount from a discharge tube 6 (described later), but the amount reduction of the oil 21 can be prevented by providing the auxiliary tube 3b. In addition, a valve 3c is provided in the middle of the auxiliary tube 3b, and the oil 21 can be allowed to flow or the flow can be stopped by opening/closing the valve 3c.

Furthermore, the separating plate 2a is formed of a member having high heat conductivity as described above, and heat can be transmitted to the erythritol 22 indirectly via the separating plate 2a from the entire lower side by discharging the oil 21, to which heat has been supplied, to the lower space.

The discharge tube 6 (the first supply tube) that discharges the oil 21 housed in the upper space is disposed in the above-described heat-storage tank 2. Note that a pump 5a and a flow rate meter 5b of the flow rate controller 5 are disposed in the middle of the discharge tube 6, the oil 21 flows in the discharge tube 6 by operating the pump 5a, and the flow rate meter 5b can measure the flow rate of the oil 21 flowing in the discharge tube 6. Then, the pump 5a is controlled (specifically, the rotation number of pump is controlled) based on a measurement result of the flow rate meter 5b, and the flow rate of the oil 21 can be controlled to maintain a fixed level always. The pump 5a and the flow rate meter 5b will be described later.

A connection tube 8 (the third supply tube) and an intake tube 9 are connected to the discharge tube 6. Specifically, the discharge tube 6, the connection tube 8, and the intake tube 9 are connected to each other by a three-way valve 4a. The three-way valve 4a is a valve capable of switching two flow paths by an opening/closing operation. Note that the three-way valve 4a can connect the discharge tube 6 to the connection tube 8 in a flowable manner, can connect the discharge tube 6 to the intake tube 9 in a flowable manner, and can switch the flow paths for the oil 21 by a control section 4c of the flow path controller 4 (described later). Further, the intake tube 9 is connected to the heat exchanger 11, and the oil 21 flowing in the intake tube 9 is taken in by the heat exchanger 11.

On the other hand, a supply tube 7 for taking in the oil 21 (the second supply tube) is disposed to the heater 3. Then, the connection tube 8 and a removing tube 10 are connected to the supply tube 7. Specifically, the supply tube 7, the connection tube 8 and the removing tube 10 are connected to each other by a three-way valve 12. Note that the removing tube 10 is connected to the heat exchanger 11, heat is collected in the heat exchanger 11, and the oil 21 discharged from the heat exchanger 11 flows in the tube 10. Then, by operating the three-way valve 12, the supply tube 7 can be connected to the removing tube 10 in a flowable manner, or the supply tube 7 can be connected to the connection tube 8 in a flowable manner. Meanwhile, a connection part between the supply tube 7, the connection tube 8 and the removing tube 10 may be a three-way regulator to prevent a reverse flow of the oil 21 instead of the valve. In this case, there is no need to operate the regulator to switch flow path as required in the case of the three-way valve.

Note that the intake tube 9 and the removing tube 10 may be connected to the heat exchanger 11 detachably, or may be directly connected to the external device 15 without laying the heat exchanger 11 between them.

As described, by disposing the tubes 6 to 10, two flow paths being a flow path (hereinafter, referred to as the first flow path) that consists of the discharge tube 6, the connection tube 8 and the supply tube 7 and a flow path (hereinafter, referred to as the second flow path) that consists of the discharge tube 6, the intake tube 9, the removing tube 10 and the supply tube 7 are formed. Then, the three-way valve 4a is opened/closed depending on a heat-storage condition or the like to switch the first flow path and the second flow path. For example, the flow path is switched to the first flow path in the case of storing heat in the heat-storage tank 2. Further, the flow path is switched to the second flow path in the case of using the stored heat in the external device 15 in order to allow the oil 21 to be supplied to the heat exchanger 11. Further, although described later, in the case where the flow rate of the oil 21 to be supplied to the heat exchanger 11 needs to be controlled, the oil 21 is allowed to flow in both flow paths of the first flow path and the second flow path. Meanwhile, the three-way valve 12 may be operated synchronously with the three-way valve 4a to switch the flow path, or may be operated independently.

The control of the flow rate of the oil 21 flowing in the above-described tubes 6 to 10 and the switching of the first flow path and the second flow path are controlled by the flow path controller 4 and the flow rate controller 5.

The flow rate controller 5 has the pump 5a, the flow rate meter 5b and the control section 5c, and the pump 5a and the flow rate meter 5b are provided in the middle of the discharge tube 6 as described above. The pump 5a is a device for allowing the oil 21 to flow, and the flow rate meter 5b is a device for measuring a volume or a mass of fluid flowing through a section in a unit time regarding the oil 21 flowing in the discharge tube 6. Further, the control section 5c is connected to the pump 5a and the flow rate meter 5b, and controls the pump 5a to maintain the value of the flow rate meter 5b always at a fixed level based on a measurement result of the flow rate meter 5b. Specifically, as the erythritol 22 in the heat-storage tank 2 is cooled down, its state is changed from liquid to solid as described above. Then, it becomes difficult for the oil 21 in the lower space of the heat-storage tank 2 to pass through the holes of the separating plate 2a and move to the upper space. As a result, the amount of the oil 21 in the upper space is reduced, and the flow rate of the oil 21 discharged from the discharge tube 6 is also reduced. This reduces the flow rate of the oil 21 flowing in the discharge tube 6, and it becomes impossible to supply sufficient oil 21 to the heat exchanger 11. Therefore, the rotation number (drive force) of the pump 5a is increased to increase the flow rate when the flow rate is reduced, or the rotation number of the pump 5a is reduced to reduce the flow rate when the flow rate is increased, and thus the flow rate of the oil 21 flowing in the discharge tube 6 is controlled to maintain a fixed level always. With this, the heat exchanger 11 can always take in a fixed amount of oil 21.

Meanwhile, the flow rate meter 5b is used to maintain the flow rate at a fixed level in this embodiment. However, other measuring devices may be used where the flow rate is led out by measuring the flow pressure of the oil 21 flowing in the discharge tube 6 and the pump 5a is controlled to maintain the flow pressure at a fixed level always.

The flow path controller 4 has the three-way valve 4a, a thermometer 4b (the first heat quantity detector) and the control section 4c. The three-way valve 4a is a valve for connecting the discharge tube 6, the connection tube 8 and the intake tube 9 as described above. The thermometer 4b measures temperature as the first thermal parameter being the state variable regarding heat quantity taken out in the heat exchanger 11. Herein, the thermal parameter is a state variable showing the energy state regarding the heat quantity of a heat medium, which is a parameter having association with the heat quantity to be exchanged, and it is not limited to the temperature shown in this embodiment. Further, there is a case where the thermometer measures a plurality of parameters. Specifically, the heat exchanger 11 takes in the oil 21 that has taken in heat stored in the heat-storage tank 2 as described above, and on the other hand, it takes in the heat medium (water) used in the external device 15, and the heat of the oil 21 is transmitted to the heat medium by indirect contact between the oil 21 that has been taken in and the heat medium. The thermometer 4b is arranged in the middle of the intake tube 17 in which the heat medium flows, which has been discharged as hot water after heat was transmitted therein in the heat exchanger 11, and the heat quantity taken out in the heat exchanger 11 is led out by measuring the temperature of the heat medium.

The control section 4c controls an opening level of the three-way valve 4a based on the heat quantity measured by the thermometer 4b, and adjusts the level of flow rate of the oil 21 flowing in the first flow path and the second flow path. For example, in the case where the heat quantity taken out in the heat exchanger 11 is high, that is, when the temperature of water discharged from the heat exchanger 11 is high, control section adjusts the opening level of the three-way valve 4a to allow the oil 21 to flow in the first flow path as well, and thus the flow rate of the oil 21 taken in by the heat exchanger 11 can be reduced. Thus, the heat quantity taken out in the heat exchanger 11 can be reduced. Further, in the case where the heat quantity taken out in the heat exchanger 11 is low, the flow rate of the oil 21 taken in by the heat exchanger 11 can be increased by preventing the oil 21 from flowing in the first flow path, and thus the heat quantity taken out in the heat exchanger 11 can be also increased.

As described, by controlling the three-way valve 4a based on the heat quantity taken out in the heat exchanger 11, the heat quantity taken out in the heat exchanger 11 can be controlled as well. Consequently, it is possible to adjust heat quantity to a level required in the heat exchanger 11 and the external device 15, and the heat exchanger 11 and the external device 15 can be operated efficiently.

For example, the erythritol 22 having the melting point at 119°C is used as the heat-storage material in this embodiment, but when a heat-storage material having the melting point at 100°C or higher is used, heat quantity that the oil 21 to be taken in by the heat exchanger 11 holds is also high at the initial stage of operating heat collection. For this reason, the heat quantity taken in by the heat exchanger 11 and the external device 15 also becomes high. Accordingly, there is a danger that water being the heat medium will be boiled when the external device 15 is a water cooler/heater or the like, for example, and heat cannot be used even if it is collected. Therefore, heat quantity required by the external device 15 can be collected by adjusting the flow rate of the oil 21 taken in by the heat exchanger 11 while measuring the heat quantity, and efficient operation can be performed.

Meanwhile, it is preferable that the control section 4c controls the flow rate in such a manner that the temperature of water detected by the thermometer 4b becomes 70°C or higher and 100°C or lower in this embodiment. In this embodiment, the external device 15 is an absorption type water cooler/heater and the absorption type water cooler/heater performs cooling or the like by using vaporization of water as described above. Then, since the boiling point of water is 100°C, water cannot be vaporized sufficiently and cooling or the like cannot be performed efficiently by the external device 15 when the temperature of water supplied to the external device 15 is 70°C or lower. Further, since water vaporizes at 100°C or higher, it is impossible to use vapor in the external device 15. Therefore, it is preferable to control the temperature of water to be discharged from the heat exchanger 11 within the range of 70°C or higher and 100°C or lower.

Furthermore, the thermometer 4b may be installed so as to measure temperature as the second thermal parameter being the state variable regarding the heat quantity of the oil 21 taken in by the heat exchanger 11. Specifically, it may be provided in the middle of the intake tube 9. In this case, since the flow rate of the oil 21 taken in by the heat exchanger 11 is controlled based on the heat quantity taken out in the heat exchanger 11 in the same manner as above, it is possible to adjust heat quantity to a level required in the heat exchanger 11 and the external device 15, and the heat exchanger 11 and the external device 15 can be operated efficiently. In addition, the measuring device that measures the thermal parameter being the state variable regarding heat quantity may not be a thermometer.

Next, description will be made for an operation during heat storage and an operation during heat collection of the heat-storage type heat supplying apparatus 1 and the heat supplying system 100, which are constituted as described above.

First, the case of storing heat in the heat-storage tank 2 will be described. The three-way valves 4a, 12 are switched to the first flow path first, and the pump 5a is activated to send the oil 21 housed in the upper space of the heat-storage tank 2 from the first flow path to the heater 3. Then, the oil 21, once it is taken in by the heater 3, is supplied with waste heat generated from a factory or the like. The oil 21 to which heat has been supplied is discharged to the lower space of the heat-storage tank 2 by the tube 3a for heater. On the other hand, the oil 21 to which heat has been supplied by the heater 3 flows in the auxiliary tube 3b whose valve 3c is opened, and is discharged into the oil 21 of the upper space.

Since the erythritol 22 is solid at the beginning point of heat storage and it clogs the holes of the separating plate 2a, the oil 21 in the lower space is not discharged from the holes of the separating plate 2a. Therefore, by allowing the oil 21 to which heat has been supplied to flow in the auxiliary tube 3b, heat is transmitted to the erythritol 22 indirectly, and the erythritol 22 can be changed from solid to liquid faster. Further, since the auxiliary tube 3b passes in the lower space, it is possible to indirectly transmit heat to the oil 21 in the lower space to maintain the oil 21 in the lower space at high temperature. With this, heat can be transmitted to the erythritol 22 indirectly via the separating plate 2a from the entire lower side, and the erythritol 22 can be changed from solid to liquid even faster. Furthermore, since a part of the heater 3 is provided so as to contact the erythritol 22, the erythritol 22 can be changed from solid to liquid by using heat generated from the heater 3.

As the erythritol 22 is changed to liquid and the oil 21 in the lower space is discharged from the holes of the separating plate 2a, the oil 21 passes through the holes of the separating plate 2a and is discharged in the erythritol 22. The oil discharged in the erythritol 22 goes up because its specific gravity is lighter than that of the erythritol 22, and is taken in by the oil 21 in the upper space. The oil transmits heat to the erythritol 22 while it goes up. Then, the oil 21 in the upper space of the heat-storage tank 2, which has finished heat exchange, is supplied to the heater 3 by the pump 5a again, and heat can be stored by repeating the above-described operation.

Next, description will be made for the case of cooling the erythritol 22 in the heat-storage tank 2, that is, the case of collecting heat from the erythritol 22 in which heat is stored. The three-way valves 4a, 12 are switched to the second flow path first, and the pump 5a is activated to flow the oil 21 housed in the upper space of the heat-storage tank 2 in the discharge tube 6. Note that, in this embodiment, the three-way valves 4a, 12 are operated to allow the oil 21 to flow only in the second flow path at the initial stage of operating heat collection.

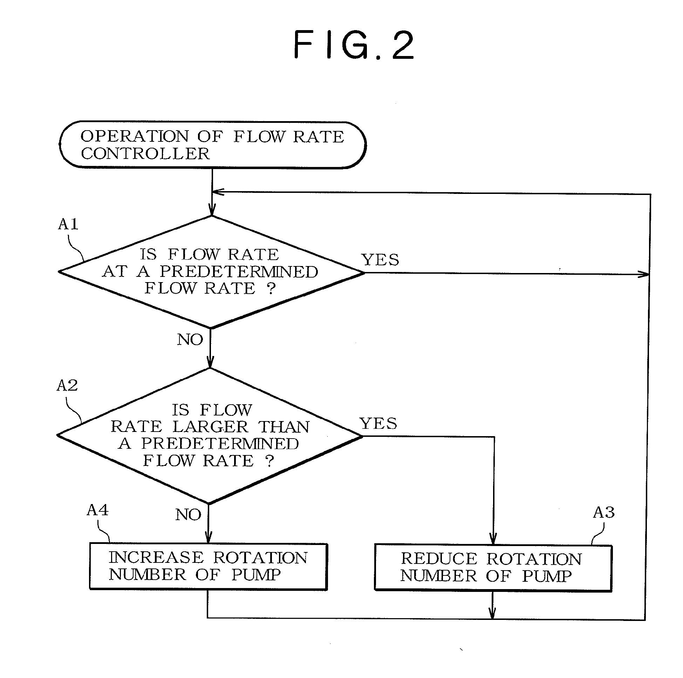

At this point, the flow rate of the oil 21 flowing in the discharge tube 6 is controlled by the flow rate controller 5. Specifically, the flow rate controller 5 measures the flow rate of the oil 21 in the discharge tube 6 first by the flow rate meter 5b, and determines whether or not the flow rate is a flow rate previously set as shown in Fig. 2 (A1). Note that the flow rate to be previously set is decided by the external device 15. When the flow rate is the previously set flow rate (A1: YES), A1 is repeated to check the flow rate of the oil 21 constantly. If it is not the previously set flow rate (A1: NO), whether or not the flow rate of the oil 21 is larger than the previously set flow rate is determined (A2). When it is larger than the previously set flow rate, the rotation number of the pump 5a is reduced (A3) in order to reduce the flow rate of the oil 21, and processing returns to a1. On the other hand, it is not larger than the previously set flow rate (A2: NO), that is, when it is smaller than the previously set flow rate, the rotation number of the pump 5a is increased (A4) in order to increase the flow rate of the oil 21. Specifically, since the erythritol 22 is solidifed as the erythritol 22 is cooled down, a discharge amount from the heat-storage tank 2 is reduced. Accordingly, the flow rate of the oil 21 to be supplied to the heat exchanger 11 is also reduced, so that the flow rate of the oil 21 flowing in the discharge tube 6 can be increased by increasing the rotation number of the pump 5a. Processing returns to A1 after the rotation number of the pump 5a is increased.

As described, the flow rate of the oil 21 is measured by the flow rate meter 5b, and the pump 5a is controlled to bring it to the previously set flow rate. Then, the oil 21 is taken in by the heat exchanger 11.

The heat exchanger 11, which has taken in the oil 21 having a fixed flow rate as described above, takes in water being the heat medium to be used in the external device 15 on one hand. In the heat exchanger 11, since tubes having high heat conductivity, in which the oil 21 taken in and the heat medium flows, are provided so as to contact each other, the heat of the oil 21 is indirectly transmitted to the heat medium via the wall of the tubes. Once heat is transmitted to the heat medium in the heat exchanger 11, the heat medium is discharged from the heat exchanger 11 and supplied to the external device 15. At this point, the flow path controller 4 performs control of switching the first flow path and the second flow path based on the heat quantity of the discharged heat medium, and adjusts the flow rate of the oil 21 flowing in each path.

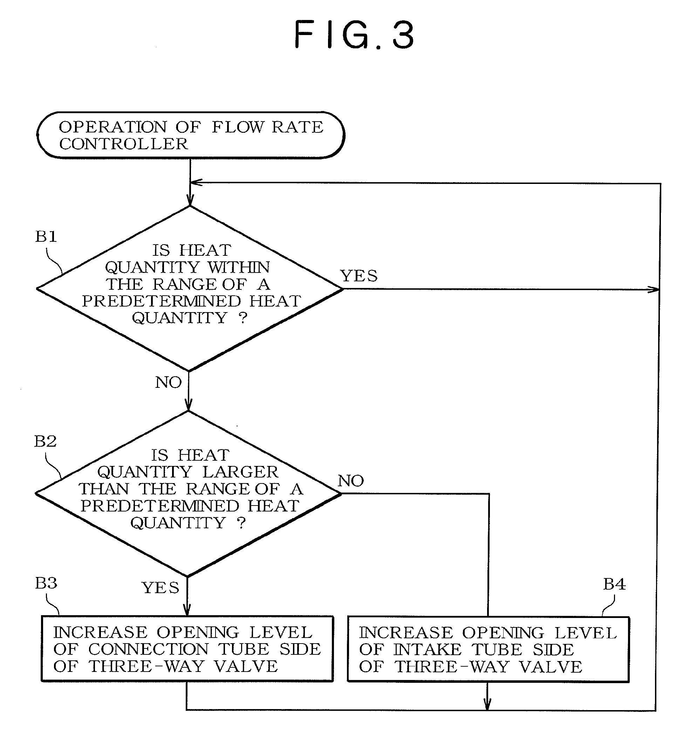

Specifically, the flow path controller 4 firstly determines whether or not the heat quantity led out from the temperature as the first parameter, which has been measured by the thermometer 4b, is within the range of the previously set heat quantity (preferably, measured temperature is 70°C or higher and 100°C or lower) as shown in Fig. 3 (B1). When the heat quantity is within the range of the previously set heat quantity (B1: YES), B1 is repeated and heat quantity to be taken out is constantly checked. If it is not within the range of the previously set heat quantity (B1: NO), whether or not the heat quantity is larger than the range of the previously set heat quantity is determined (B2). When the heat quantity is larger than the range (B2:YES), the opening level of the three-way valve 4a is adjusted to allow the oil 21 to flow in the connection tube 8 as well (B3), processing returns to B1, and whether or not the heat quantity is within the range of the previously set heat quantity is checked again. If the heat quantity is not larger than the range of the previously set heat quantity (B2: NO), that is, when it is smaller than the range of the previously set heat quantity, the opening level of the three-way valve 4a is adjusted not to allow the oil 21 to flow in the connection tube 8 (B4), processing returns to B1, and whether or not the heat quantity is within the range of the previously set heat quantity is checked again.

Once the heat exchanger 11 collects heat from the oil 21 that has been taken in, it supplies the heat medium, to which heat has been transmitted, to the external device 15 and discharges the oil 21 to be sent to the heater 3. The heat medium to which heat has been transmitted is used in the external device 15. Further, when the oil 21 is taken in by the heater 3, it is discharged to the lower space of the heat-storage tank 2, and on the other hand, the oil 21 supplied with heat by the heater 3 flows in the auxiliary tube 3b and is discharged into the oil 21 of the upper space. Note that, in the case of cooling, the valve 3c of the auxiliary tube 3b is closed to prevent the oil 21 from flowing in the auxiliary tube 3b. In the case of taking out stored heat, by not allowing the oil 21 to flow in the auxiliary tube 3b, it is possible to prevent the oil 21 from being sent to the heat exchanger 11 before heat is sufficiently transmitted from the erythritol 22 to the oil.

Meanwhile, when the flow rate controller 5 determines that the flow rate of the oil 21 is smaller than the previously set flow rate, the valve 3c of the auxiliary tube 3b may be turned to an open state to allow the oil 21 to easily flow from the heater 3 to the upper space of the heat-storage tank 2. This makes the flow rate of the oil 21 flowing in the discharge tube 6 easily adjustable. Further, in the case where the heat quantity taken out is larger than a predetermined range, the valve 3c of the auxiliary tube 3b is turned to an open state by the flow path controller 4, and the oil 21 to which heat is not transmitted from the erythritol 22 may be discharged to the upper space of the heat-storage tank 2. This can reduce the heat quantity of the oil 21 that is discharged to the discharge tube 6 and taken in by the heat exchanger 11, so that it is possible to adjust the heat quantity required in the heat exchanger 11 and the external device 15, and the heat exchanger 11 and the external device 15 can be efficiently operated.

When the oil is discharged to the lower space, the oil 21 in the lower space passes through the holes of the separating plate 2a to be discharged into the erythritol 22. The oil 21 discharged into the erythritol 22 goes up because its specific gravity is lighter than that of the erythritol 22, and is taken in by the oil 21 of the upper space. Heat is transmitted from the erythritol 22 while the oil goes up. Then, the oil 21 in the upper space of the heat-storage tank 2, which has finished heat exchange, is supplied to the heat exchanger 11 by the pump 5a. After that, the above-described operation is repeated until the heat stored in the erythritol 22 is collected, that is until the erythritol 22 becomes solid.

### (First modification example)

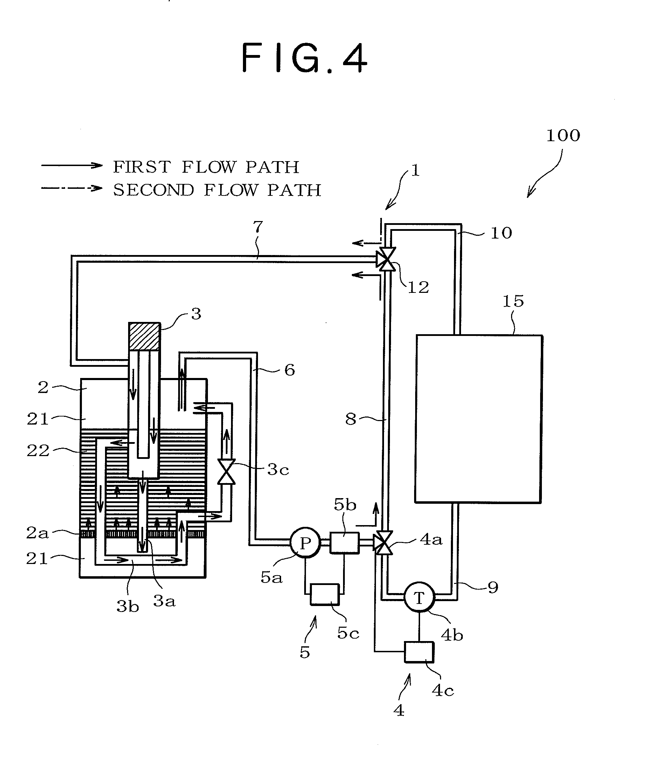

Further, as the first modification example of the heat-storage type heat supplying system 100 explained in the above-described embodiment, the constitution as shown in Fig. 4 may be employed where the heat exchanger 11 is the external device 15 of the absorption type water cooler/heater. In other words, in the above-described embodiment, the heat exchanger 11 takes out stored heat and the heat taken out is used in the external device 15. However, the oil 21 to which heat has been supplied in the heat-storage tank 2 may be directly supplied to the external device 15 to take out the stored heat in the external device 15. In this case, the thermometer 4d (the second heat quantity detector) of the flow path controller 4 is provided on the intake tube 9, and the flow path is controlled based on the detected temperature of oil 21 to be taken in by the external device 15. Since the absorption type water cooler/heater is designed to perform cooling by using the vaporization of water as described above, water can be vaporized without losing heat by directly taking in the oil 21 to which heat has been supplied in the heat-storage tank 2, and thus it is possible to efficiently operate the absorption type water cooler/heater.

### (Second modification example)

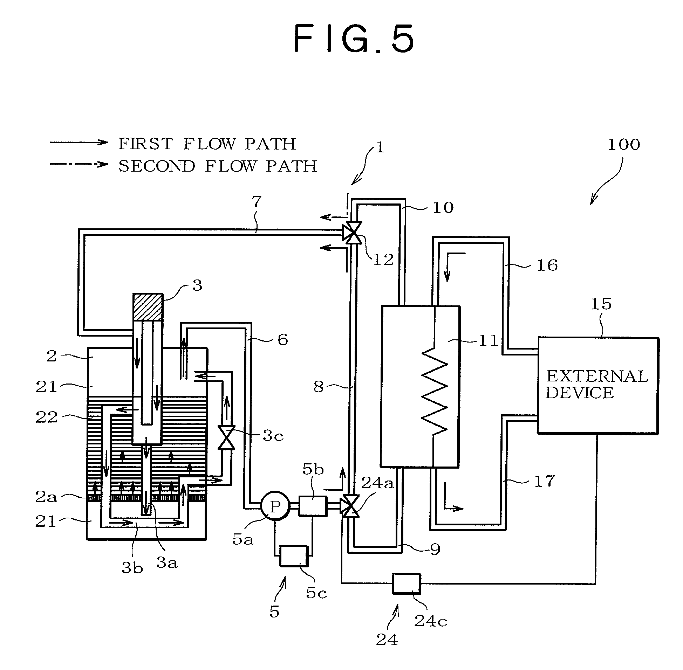

Further, as the second modification example of the heat-storage type heat supplying system 100 explained in the above-described embodiment, the constitution as shown in Fig. 5 may be employed where a three-way valve 24a controls the flow rate of the oil 21 to be supplied to the heat exchanger 11 by switching the case of blocking the intake tube 9 to allow the oil 21 to flow only in the connection tube 8 and the case of blocking the connection tube 8 to allow the oil 21 to flow only in the intake tube 9.

In this case, the external device 15 determines whether or not sufficient heat is supplied and transmits ON/OFF signals to a flow path controller 24 (the third flow rate control section) that consists of the three-way valve 24a and a control section 24c. For example, the ON signal is transmitted when heat supplied to the external device is insufficient, and the OFF signal is transmitted when excessive heat is supplied. The control section 24c controls the three-way valve 24a based on the signal, the oil 21 is allowed to flow in the intake tube 9 in the case of the ON signal, and the flow of the oil 21 to the intake tube 9 is stopped in the case of the OFF signal. Accordingly, the flow rate of the oil 21 to be supplied to the heat exchanger 11 can be controlled by a simple control mechanism using ON/OFF signals, and heat required by the external device 15 can be easily supplied.

### (Third modification example)

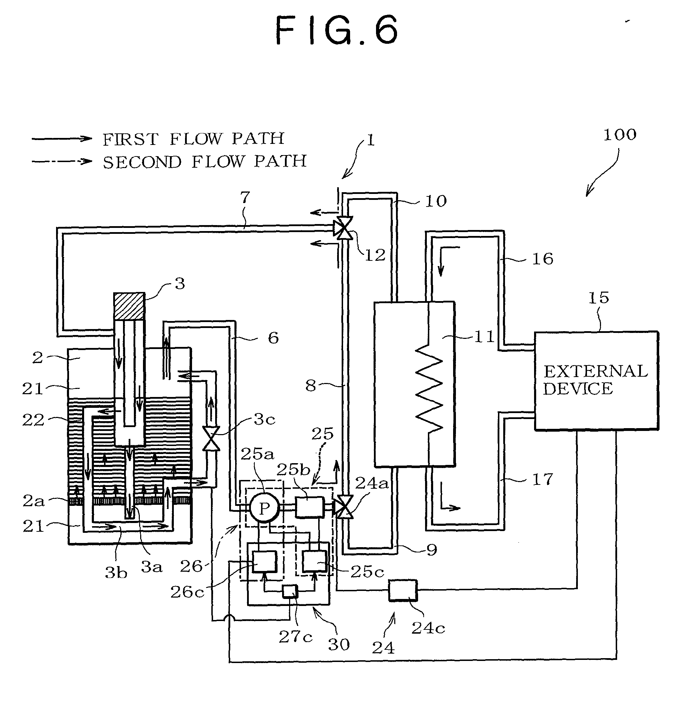

Furthermore, the third modification example of the heat-storage type heat supplying system 100 explained in the above-described embodiment is shown in Fig. 6. In this constitution, the operation of a pump 25a is controlled by a pump control section 30. The pump control section 30 consists of a constant flow rate control section 25c, an external control section 26c and an operation switching control section 27c, and the operation control section 27c controls switching of the case where the operation of the pump 25a is controlled by the constant flow rate control section 25c and the case where the operation is controlled by the external control section 26c. Herein, the first flow rate control section 25 consists of the pump 25a, a flow rate meter 25b and the constant flow rate control section 25c, and constant flow rate control section 25c controls the rotation number of the pump 25a based on the measurement result of the flow rate of the oil 21, which is measured by the flow rate meter 25b. Further, the second flow rate control section 26 consists of the pump 25a and the external control section 26c, and the external control section 26c controls the pump 25a to activate or stop based on the ON/OFF signals indicating a request of heat supply, which is transmitted from the external device 15.

The operation switching control section 27c allows the constant flow rate control section 25c to control the pump 25a when the erythritol 22 is in a liquid state (early part of heat supply to external device 15). In this case, the flow rate of the oil 21 to supplied to the heat exchanger 11 is controlled by the three-way valve 24a based on the ON/OFF signals indicating a request of heat supply from the external device 15 in the same manner as the second modification example described. When the erythritol 22 is solidified after forming the flow paths for the oil 21 in the later part of heat supply, the operation switching control section 27c switches to the control of the pump 25a by the external control section 26c. Specifically, based on a temperature detection result of the erythritol 22 obtained by the thermometer, for example, the erythritol 22 is determined to be solid when the temperature is the melting point of the erythritol 22 or lower, and control is switched to pump control by the external control section 26c. At this point, the three-way valve 24a is controlled so as to block the flow paths to the connection tube 8 and allow the oil 21 to flow only in the intake tube 9 in order to prevent heat loss caused by the passage of the oil 21 in the connection tube 8.

Herein, in the case of supplying heat to the external device 15, when the operation of the pump 25a is stopped in a state before the erythritol 22 changes to solid, there is a possibility that a part of the erythritol 22 in the liquid state will be solidified so as to clog ascending paths for the oil 21, and the oil 21 has a difficulty of moving upward in the erythritol 22 at the point of re-starting an operation compared to the case of operating the pump 25a continuously. As a result, it is considered that an increase of the output of the pump 25a will be necessary. Further, there is also a danger that the erythritol 22 will be solidified in the state where erythritol completely clogs the ascending paths for the oil 21. On the other hand, when the pump 25a is continuously operated until all erythritol 22 is changed to solid, a fixed flow rate of the oil 21 keeps on moving upward in the erythritol 22, and the erythritol 22 is easily solidified without clogging the ascending paths for the oil 21.

Therefore, by switching the pump 25a to an ON/OFF operation after the erythritol 22 forms the flow paths for the oil 21 and is solidified, it becomes possible to reduce the operating power of the pump 25a without blocking the upward movement of the oil 21 in the erythritol 22 by the stop of pump 25a.

As described above, this embodiment is the heat-storage type heat supplying apparatus 1 where stored heat is supplied to the oil 21 and the oil 21 is supplied to the heat exchanger 11 that takes out heat from the oil 21 to which heat has been supplied, in which the apparatus has the heat-storage tank 2 that houses the erythritol 22, which stores heat depending on a state change between solid and liquid, and the oil 21, which performs heat exchange by contacting the erythritol 22, has a smaller specific gravity than that of the erythritol 22, and is separated from the erythritol 22, in the internal space, takes in the oil 21 in the lower portion of the internal space, and discharges the oil 21 from the upper portion of the internal space; the discharge tube 6 and the intake tube 9, which supply the oil 21 discharged from the heat-storage tank 2 to a heat exchanger 11; the supply tube 7 and the removing tube 10, which supply the oil 21 from which heat has been removed in the heat exchanger 11 to the heat-storage tank 2; a flow rate meter 5b that detects the flow rate of the oil 21 flowing in the discharge tube 6; and the pump 5a that is provided on the discharge tube 6 and controls the flow rate of the oil 21 flowing in the discharge tube 6 based on a detection result from the flow rate control section 5.

According to this constitution, since the flow rate of the oil 21 flowing in the discharge tube 6 is detected and the flow rate of the oil 21 is adjusted based on the detection result, the flow rate of the oil 21 flowing in the discharge tube 6 can be fixed always. Thus, a fixed amount of the heat-exchange medium can be always supplied to the heat exchanger 11, and the heat exchanger 11 can be operated efficiently.

Specifically, the oil 21 has a smaller specific gravity than that of the erythritol 22 and is separated from the erythritol 22, so that the erythritol 22 and the oil 21 are housed in the internal space of the heat-storage tank 2 in a vertically separated manner. Then, by discharging the oil 21 to the lower portion of the internal space, the oil 21 passes through the erythritol 22 to move to the oil 21 in the upper portion, and the erythritol 22 changes its state from liquid to solid during the movement. Once it changes to solid, it becomes difficult for the erythritol 22, which has been discharged to the lower portion of the internal space, to move upward, and as a result, the flow rate of the oil 21 to be discharged from the heat-storage tank 2 to flow in the discharge tube 6 becomes smaller. Consequently, sufficient oil 21 cannot be supplied to the heat exchanger 11. Therefore, by adjusting the flow rate of the oil 21 flowing in the discharge tube 6, sufficient oil 21 can be supplied to the heat exchanger 11.

Further, the third modification example is a constitution having the pump 25a that controls the flow rate of the oil 21 to be supplied from the discharge tube 6 to the heat exchanger 11 by switching the case of stopping the flow of the oil 21 in the discharge tube 6 and the case of allowing the oil 21 to flow in the discharge tube 6 in the state after the erythritol 22 is changed to solid and paths for flowing the oil 21 are formed in the erythritol 22.

According to this constitution, since the erythritol 22 of the liquid state is not solidified to block the flow of the oil 21 after the state of the erythritol 22 is changed to solid and the paths for the heat-exchange medium are formed, the flow rate of the oil 21 to be supplied to the heat exchanger 11 can be easily controlled by the ON/OFF control of the pump 25a, the operating power can be reduced by stopping the operation of the pump 25a, and an efficient operation can be performed.

Furthermore, this embodiment is a constitution having the connection tube 8 that supplies the oil 21 flowing in the discharge tube 6 directly to the supply tube 7, and the three-way valve 4a that controls the flow rate of the oil 21 to be supplied from the discharge tube 6 to the heat exchanger 11 by controlling the flow rate of the oil 21 to be supplied from the supply tube 7 to the connection tube 8.

According to this constitution, the flow rate of the oil 21 taken in by the heat exchanger 11 can be controlled, so that the heat quantity taken out in the heat exchanger 11 can be adjusted.

Further, the second modification example is a constitution where the three-way valve 24a controls the flow rate of the oil 21 by switching the case where the supply of the oil 21 from the discharge tube 6 to the heat exchanger 11 is stopped and the oil supplied to the connection tube 8 and the case where the supply of the oil 21 from the discharge tube 6 to the connection tube 8 is stopped and the oil is supplied to the heat exchanger 11.

According to this constitution, the flow rate of the oil 21 to be supplied to the heat exchanger 11 can be controlled by switching the two states being the case of supplying the oil 21 to the heat exchanger 11 and the case of stopping the supply of oil by the ON/OFF control of the three-way valve 24a, so that the heat quantity taken out by the heat exchanger 11 can be easily adjusted.

Furthermore, this embodiment a constitution further having the thermometer 4b that detects the temperature as the first thermal parameter being the state variable regarding the heat quantity taken out from the oil 21 in the heat exchanger 11, in which the three-way valve 4a controls the flow rate of the oil 21 to be supplied from the discharge tube 6 to the connection tube 8 and controls the flow rate of the oil 21 to be supplied from the discharge tube 6 to the heat exchanger 11 based on the detection result of the thermometer 4b.

According to this constitution, since the flow rate of the oil 21 taken in by the heat exchanger 11 is controlled based on the temperature as the first thermal parameter being the state variable regarding the heat quantity taken out in the heat exchanger 11, a heat quantity required by the heat exchanger 11 can be taken out.

Still further, as the first modification example of this embodiment, it further has the thermometer 4d that detects the temperature of the oil 21 to be supplied to the heat exchanger 11, in which the three-way valve 4a controls the flow rate of the oil 21 to be supplied from the discharge tube 6 to the connection tube 8 and controls the flow rate of the oil 21 to be supplied from the discharge tube 6 to the heat exchanger 11 based on the detection result of the thermometer 4d.

According to this constitution, since the flow rate of the heat-exchange medium taken in by the heat-removing device is controlled based on the temperature as the second thermal parameter being the state variable regarding the heat quantity taken out in the heat exchanger 11, so that a heat quantity required by the heat exchanger 11 can be taken out.

Further, the heat supplying system of this embodiment has: the heat-storage type heat supplying apparatus 1; the external device 15 being the absorption type water cooler/heater that makes cold water by utilizing the vaporization heat of water; the heat-removing device 11 that supplies heat taken out from the heat-exchange medium, to which heat has been supplied, to the water utilized in the external device 15; the supply tube 16 that supplies the water from the external device 15 to the heat-removing device 11; and the intake tube 17 that supplies the water, to which heat has been supplied, from the heat-removing device 11 to the external device 15 and has the thermometer 4b that detects the temperature of the water to which heat has been supplied, in which the three-way valve 4a controls the flow rate of the oil 21 to be supplied from the discharge tube 6 to the connection tube 8 and controls the flow rate of the oil 21 to be supplied from the discharge tube 6 to the heat exchanger 11 such that the temperature of the water, which is detected by the thermometer 4b, becomes 70°C or higher and 100°C or lower.

According to this constitution, the flow rate of the oil 21 to be supplied to the heat-removing device 11 is controlled such that the temperature of the water detected by the thermometer 4b becomes 70°C or higher and 100°C or lower. Since the external device 15 has a limited temperature of hot water to be used, hot water outside a condition range cannot be used. Therefore, the heat stored can be effectively utilized without wasting it by controlling the temperature of water at 70°C or higher and 100°C or lower.

As the first modification example, it is a heat supplying system that has the heat-storage type heat supplying apparatus 1 and the heat-removing device 11, in which the heat-removing device 11 is the external device 15 of the absorption type water cooler/heater that supplies heat taken out from the oil 21, to which heat has been supplied, to water, and makes cold water by utilizing the vaporization heat of water.

According to this constitution, stored heat can be directly used by making the heat-removing device 11 become the absorption type water cooler/heater that supplies heat taken out from the heat-exchange medium, to which heat has been supplied, to the water and makes cold water by utilizing the vaporization heat of water, so that the absorption type water cooler/heater can be operated efficiently.

In addition, although the present invention has been explained based on the preferable embodiment, the present invention can be modified within a scope without departing from the gist of the invention. Specifically, the erythritol 22 is used as the heat storage storing waste heat and the oil 21 is used as the heat-exchange medium that supplies heat to the heat storage, but the invention is not limited to them. Further, although the internal space of the heat-storage tank 2 is separated by the separating plate 2a, it may not be separated, and the oil 21 to which heat has been supplied by the heater 3 may be discharged into the erythritol 22. Furthermore, although only one discharge tube 6 is provided for discharging the oil 21 in the heat-storage tank 2 to the outside, the discharge tube for the first flow path and the discharge tube for the second flow path may be separately provided. Moreover, the valve 3c of the auxiliary tube 3b is opened in storing heat and closed in cooling, but the invention is not limited to this, and the valve may be opened/closed depending on the state of the erythritol 22. Consequently, it is possible to eliminate problems such that the oil 21 is not discharged from the holes of the separating plate 2a depending on the state of the erythritol 22 and a tube is burst.

Furthermore, although the fl.ow rate meter 5b that measures the flow rate of the oil 21 and the pump 5a are provided only on the discharge tube 6, they may be provided on the supply tube 7 and other tubes as well. In this case, the entire flow rate of the oil 21 circulating in the heat-storage type heat supplying apparatus 1 can be maintain at a fixed level, so that more stable heat storage and heat collection can be performed.

Note that the present invention is described in the above-described preferred embodiment, but the present invention is not limited only to the embodiment. It should be understood that various embodiments without departing the spirit and the scope of the present invention can be employed. Furthermore, the operation and the effect by the constitutions of the present invention are described in this embodiment, but such operation and effect are only examples, and not limitative to the present invention.

Provided is a heat-storage type heat supplying apparatus capable of supplying a fixed amount of heat-exchange medium to a heat-removing device, by which the heat-removing device is operated efficiently.

The heat-storage type heat supplying apparatus has a heat-storage tank that houses erythritol, which stores heat depending on a state change between solid and liquid, and oil that performs heat exchange by contacting the erythritol, has a smaller specific gravity than that of the erythritol, and is separated from the erythritol, in an internal space, takes in the oil in a lower portion of the internal space, and discharges the oil from an upper portion of the internal space. Then, the apparatus has a discharge tube 6 and an intake tube, which supply the oil discharged from the heat-storage tank to a heat exchanger, and a supply tube and a removing tube, which supply the oil, from which heat has been removed in the heat exchanger, to the heat-storage tank. Further, the apparatus has a flow rate meter that detects the flow rate of the oil flowing in the discharge tube, and a pump that is provided on the discharge tube and controls the flow rate of the oil flowing in the discharge tube based on a detection result from a flow rate control section.

## Claims

1. A heat-storage type heat supplying apparatus where stored heat is supplied to a heat-exchange medium and said heat-exchange medium is supplied to a heat-removing device that takes out heat from said heat-exchange medium to which heat has been supplied, said apparatus comprising:
a heat-storage tank that houses a heat storage, which stores heat depending on a state change between solid and liquid, and a heat-exchange medium that performs heat exchange by contacting said heat storage, has a smaller specific gravity than that of said heat storage, and is separated from said heat storage, in an internal space, takes in said heat-exchange medium in a lower portion of said internal space, and discharges said heat-exchange medium from an upper portion of said internal space;
a first supply tube that supplies the heat-exchange medium discharged from said heat-storage tank to said heat-removing device;
a second supply tube that supplies the heat-exchange medium, from which heat has been removed in said heat-removing device, to said heat-storage tank;
a flow rate detector that detects the flow rate of the heat-exchange medium flowing in said first supply tube; and
a first flow rate control section that is provided on said first supply tube and controls the flow rate of the heat-exchange medium flowing in said first supply tube based on a detection result from said flow rate detector.

2. The heat-storage type heat supplying apparatus according to Claim 1, wherein
under a condition after a state of said heat storage is changed to solid and paths for flowing said heat-exchange medium are formed in the heat storage, said apparatus further comprising:
a second flow rate control section that controls the flow rate of said heat-exchange medium to be supplied from said first supply tube to said heat-removing device by switching the case of stopping the flow of said heat-exchange medium in said first supply tube and the case of allowing said heat-exchange medium to flow in said first supply tube.

3. The heat-storage type heat supplying apparatus according to Claim 1 or 2, said apparatus comprising:
a third supply tube that supplies the heat-exchange medium flowing in said first supply tube directly to said second supply tube; and
a third flow rate control section that controls the flow rate of the heat-exchange medium to be supplied from said first supply tube to said heat-removing device by controlling the flow rate of said heat-exchange medium to be supplied from said first supply tube to said third supply tube.

4. The heat-storage type heat supplying apparatus according to Claim 3, wherein
said third flow rate control section controls the flow rate of said heat-exchange medium to be supplied from said first supply tube to said heat-removing device by switching the case of stopping the supply of said heat-exchange medium from said first supply tube to said heat-removing device and supplying the medium to said third supply tube and the case of stopping the supply of said heat-exchange medium from said first supply tube to said third supply tube and supplying the medium to said heat-removing device.

5. The heat-storage type heat supplying apparatus according to Claim 3 or 4, said apparatus further comprising:
a first heat quantity detector that detects a first thermal parameter being a state variable regarding a heat quantity taken out from said heat-exchange medium by said heat-removing device, wherein
said third flow rate control section controls the flow rate of said heat-exchange medium to be supplied from said first supply tube to said third supply tube and controls the flow rate of the heat-exchange medium to be supplied from said first supply tube to said heat-removing device based on a detection result of said first heat quantity detector.

6. The heat-storage type heat supplying apparatus according to Claim 3 or 4, said apparatus further comprising:
a second heat quantity detector that detects the second thermal parameter being a state variable regarding a heat quantity of said heat-exchange medium to be supplied to said heat-removing device, wherein
said third flow rate control section controls the flow rate of said heat-exchange medium to be supplied from said first supply tube to said third supply tube and controls the flow rate of the heat-exchange medium to be supplied from said first supply tube to said heat-removing device based on a detection result of said second heat quantity detector.

7. A heat-storage type heat supplying system, comprising:
the heat-storage type heat supplying apparatus of Claim 5;
an absorption type water cooler/heater that makes cold water by utilizing vaporization heat of water;
said heat-removing device that supplies heat taken out from said heat-exchange medium, to which heat has been supplied, to said water utilized in said absorption type water cooler/heater;
a first water supply tube that supplies said water from said absorption type water cooler/heater to said heat-removing device; and
a second water supply tube that supplies said water to which heat has been supplied, from said heat-removing device to said absorption type water cooler/heater and has said first heat quantity detector that detects the temperature of said water to which heat has been supplied, as said first thermal parameter, wherein
said third flow rate control section controls the flow rate of said heat-exchange medium to be supplied from said first supply tube to said third supply tube and controls the flow rate of the heat-exchange medium to be supplied from said first supply tube to said heat-removing device such that a temperature of said water, which is detected by said first heat quantity detector, becomes 70°C or higher and 100°C or lower.

8. A heat-storage type heat supplying system, comprising:
the heat-storage type heat supplying apparatus of Claim 6; and
said heat-removing device, wherein
said heat-removing device is an absorption type water cooler/heater that supplies heat taken out from said heat-exchange medium, to which heat has been supplied, to water and makes cold water by utilizing the vaporization heat of said water.
